# EUROPEAN PATENT APPLICATION

(11) **EP 4 024 665 A1**
(43) Date of publication of application: **06.07.2022**
(21) Application number: 20275192.1
(22) Date of filing: 29.12.2020
(51) Int. Cl.: H02K 1/14, H02K 15/02, H02K 3/50, H02K 15/06, H02K 15/12, H02K 1/18

(54) **STATOR DESIGN FOR ELECTRICAL MACHINE**

(71) Applicant: Hamilton Sundstrand Corporation, Charlotte, NC 28217 (US)
(72) Inventor: PAGE, Andrew, Tring, Hertfordshire HP23 4QD (GB); TATE, David J, Solihull, West Midlands B90 4SS (GB)
(74) Representative: Dehns

(57) **Abstract**

A method of constructing a stator for an electric machine, comprising forming multiple components of the stator as individual elements; assembling the components into a stator structure and mounting the stator into a machine housing (1), wherein the individual elements can be individually separated from the housing and from the stator structure and replaced with corresponding elements. Also provided is a stator made according to the method.

## Description

### TECHNICAL FIELD

The present disclosure relates to the design of a wound stator for an electrical machine.

### BACKGROUND

Electric machines such as motors and generators comprise a stator and a rotor that rotates relative to the stationary stator. In a permanent magnet electric machine, the stator comprises circumferential teeth and slots defined between adjacent teeth. Conductive wire is wound around the teeth forming windings that extend into the slots. The rotor also has circumferential teeth (or poles) that include permanent magnets. Current is generated at the stator windings which create a rotating magnetic field that attracts the permanent magnets of the rotor, causing the rotor to rotate. Various machine structures are known in the art including those where the rotor is mounted within the stator, those where the rotor is outside the stator, double rotor machines, axial flux machine, etc. The design of this disclosure is applicable to all machine structures.

High performance electric machines require large stators with a large number of stator teeth/slots and the wound stators for such machines are produced from expensive raw materials and use costly construction methods. In operation, but also during design and production before being put into use, the stator can be damaged e.g. by overheating or short circuit. If a part of the stator is damaged, it is not usually possible to repair it and often the entire stator has to be discarded and replaced. This is a particular problem in uses of large high performance machines such as in the aerospace industry.

There is, therefore, a desire for a stator design that can avoid or mitigate these problems.

### SUMMARY

According to the present disclosure, there is provided a stator design wherein the stator is formed as a plurality of modular components configured to be removably assembled together and removably assembled into a machine housing.

Preferably, the stator comprises a stator core, wherein the plurality of modular components include a plurality of segments of the stator core that combine to form the stator core.

The plurality of modular components may include a plurality of stator windings and a plurality of segments of the stator core mounted with one or more stator windings.

The plurality of modular components may also include one or more busbars.

Each modular component may include an attachment feature for releasable attachment to another of the plurality of modular components and/or for releasable attachment to a housing of the electric machine.

According to another aspect of the disclosure, there is provided a method of constructing a stator for an electric machine, comprising forming multiple components of the stator as individual elements; assembling the components into a stator structure and mounting the stator into a machine housing, wherein the individual elements can be individually separated from the housing and from the stator structure and replaced with corresponding elements.'

The method may further include assembling the plurality of components together to form a stator structure, and releasably securing each modular component to the housing by means of retention means.

Preferably, each modular component comprises a segment of a stator core, the method further comprising providing each segment with one or more stator windings, attaching the plurality of stator segments to form a stator structure, assembling one or more busbars to the stator structure.

An impregnating varnish may also be applied to the components.

Preferred embodiments will now be described, by way of example only, with reference to the drawings.

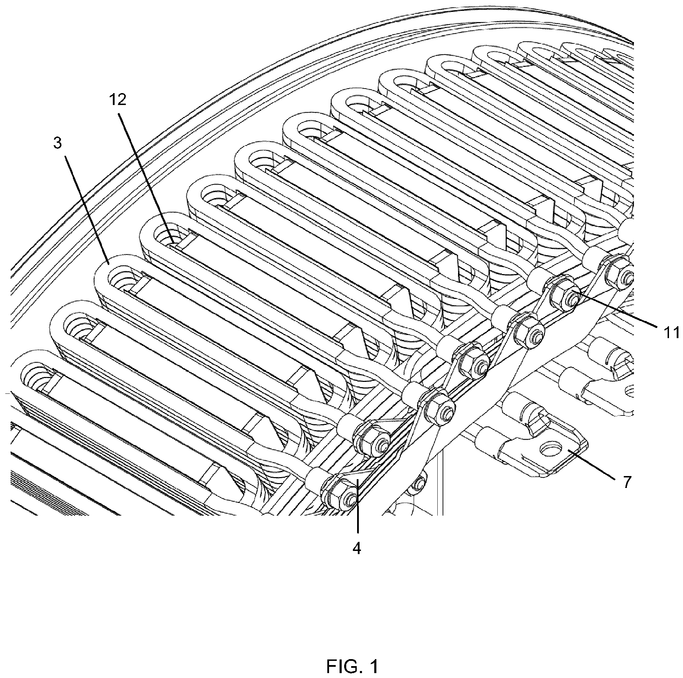

Figure 1 is a partial perspective view of a stator according to this disclosure.

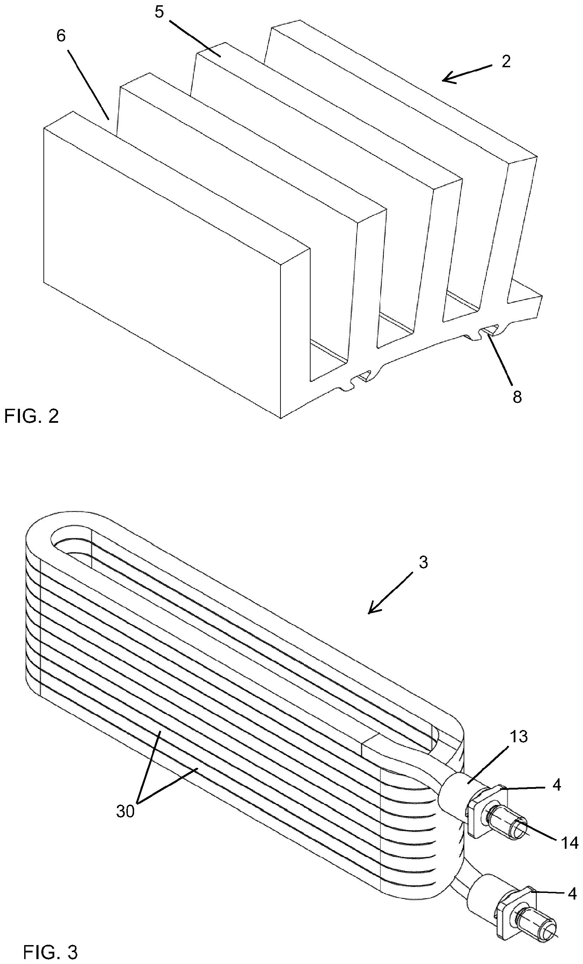

Figure 2 is a perspective view of a core segment according to the disclosure'
Figure 3 is a perspective view of a preformed coil according to the disclosure.

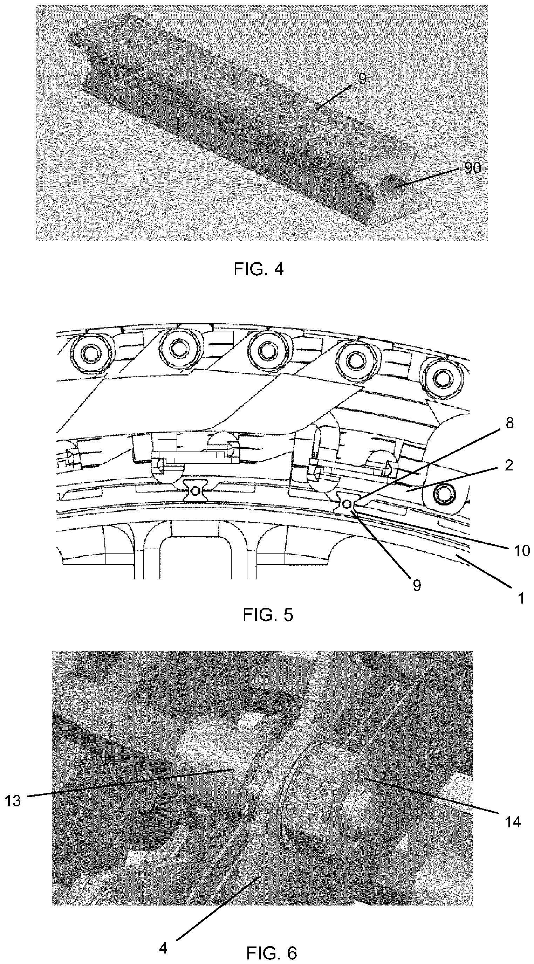

Figure 4 is an example of a retention key for use in accordance with the disclosure.
Figure 5 is a detail of Figure 1 showing retention features according to the disclosure.
Figure 6 is an enlarged detail of Figure 1.

### DETAILED DESCRIPTION

In the preferred embodiment, the stator is provided as a number of preformed modular components that can be assembled into a complete stator structure and mounted into the machine housing 1. In this way, if, during manufacture, one part of the stator fails or is damaged, only that component has to be discarded/replaced. Similarly, if one component or part of the stator fails or is damaged e.g. due to overheating or short circuit, during operation, it is possible to just remove the modular component(s) that is/are damaged or includes the damaged part and to replace it with a new modular component, rather than having to replace the entire stator.

In the most preferred embodiment, the stator body is provided as a plurality of stator body segments 2, a plurality of preformed windings 3 and individual busbar connections 4. The stator body segments can be any size according to the circumstances/use of the stator. For example, the stator body can be provided as a number of segments each corresponding to a single tooth 5 and part slot 6, or each having several teeth/slots. The segments should, to achieve the full benefit of the segmented design, be fairly small e.g. between one and four teeth 5. Each segment may be provided with a locking feature 7 to be secured to another segment. The segments may, instead, or in addition, be provided with retention features 8, 9 e.g. retention keys for attachment to the machine housing which is provided with corresponding retention features. In the example shown, the segments are provided with keyways 8 and a key 9 is provided to fit in the keyway and secure the segment to the housing 1 e.g. by also engaging in a corresponding keyway 10 on the housing. Each segment can be provided with an appropriate number of preformed windings.

During production of the stator, each segment is provided with the appropriate number of preformed coils or windings 3. The windings are preformed to have the required number of turns 30 and the required size and shape. The windings are ideally also preformed with connections for the busbars 4 at the start and end of each winding. If the winding layout for the machine has multiple coils of the same phase on adjacent teeth, these can be wound as one set of windings. Any known type of wire can be used for the windings. Litz wires are often preferred. Slot liners 12 may also be provided in the windings. The mounted winding segment may, optionally, then be impregnated with a varnish to bond the components together and provide additional electrical insulation. The segments are then either fitted to other preformed segments to form a stator structure and then mounted into the machine housing 1 or, more preferably, each segment is then fitted into and secured to the housing by means of the matching retention features 8, 9, 10 (e.g. a hook or key formed on the segment and an opposing slot or key formed in the housing) to form the complete wound stator. In a less preferred embodiment, varnish could be applied at this stage. In a preferred embodiment, the varnish is applied in stages e.g. in a first stage, varnish is applied to the formed coils to help them retain their shape; then, the varnish is applied to the stator segment/coil assembly; next, the varnish is applied to the remaining portions of the assembly e.g. the bus bars, to ensure everything is fully coated. The first stage, however, may not be achievable with all designs. The conductive busbars 4 can then be fitted to the assembled segments 2 and windings 3. The busbars link the windings together and form the neutral point for the wound stator. A removable joint 11 between the busbar and the winding, such as described in EP 3683940 facilitates busbar removal, but other joints can be utilised. The example shown uses a combination of a threaded stud 13 and a removable retaining nut 14. If, during production, one of the segments/windings/busbars is faulty or becomes damaged, just that segment can be discarded and replaced with a new segment.

If, during operation of the machine, part of the stator is damaged, the damaged segment/segments can be easily and individually removed from the housing and replaced with a new, working segment, without the need to replace the entire stator.

The retention features allow the segments to be quickly and easily fitted to the housing and also to be easily and quickly moved. One or more retention means may be provided on each segment. A preferred retention means is a key 9 having, for example, a dovetail shape, which can resist the torque reaction of the machine during operation and can resist radial movement of the segment to stop the segment being pulled off the key or the key being pulled from the housing. Alternatively, the retention means may be an integral part or feature of the stator segment, e.g. with the segment being designed for a form fit or interference fit.

In one example, a mechanism can be provided to facilitate the axial removal of the key, for example, an internal thread 90 may be provided on the key 9 to allow a pulling device (not shown) to be attached.

Such a modular design has particular advantages especially for large and high performance machines such as aircraft engines.

Advantages of the design include the reduction of through-life costs of the electric machine, simpler, cost effective and quicker repairability of the machine (meaning less downtime), and reduced development costs and wastage.

## Claims

1. A stator for an electric machine, wherein the stator is formed as a plurality of modular components configured to be removably assembled together and removably assembled into a machine housing.

2. The stator of claim 1, wherein the stator comprises a stator core, wherein the plurality of modular components include a plurality of segments of the stator core that combine to form the stator core.

3. The stator of claim 1 or 2, wherein the plurality of modular components include a plurality of stator windings.

4. The stator of claim 2, wherein the plurality of modular components include a plurality of segments of the stator core mounted with one or more stator windings.

5. The stator of any preceding claim, wherein the plurality of modular components includes one or more busbars.

6. The stator of any preceding claim, wherein each of the plurality of modular components includes an attachment feature for releasable attachment to another of the plurality of modular components.

7. The stator of any preceding claim, wherein each of the plurality of modular components includes a retention feature for releasable attachment to a housing of the electric machine.

8. A method of constructing a stator for an electric machine, the method comprising constructing a plurality of modular components configured to be removably assembled together and removably assembled into a machine housing.

9. The method of claim 9, further comprising assembling the plurality of components together to form a stator structure.

10. The method of claim 8 or 9, comprising releasably securing each modular component to the housing by means of retention means.

11. The method of claim 8, 9 or 10, wherein each modular component comprises a segment of a stator core, the method further comprising providing each segment with one or more stator windings, attaching the plurality of stator segments to form a stator structure, assembling one or more busbars to the stator structure.

12. The method of claim 11, further comprising applying a varnish to each segment after providing the segment with one or more stator windings.

13. The method of claim 11, further comprising applying a varnish to the stator windings before providing each segment with one or more stator windings, and then applying a varnish to the stator segment.

14. The method of any of claims 11 to 13, further comprising applying varnish to the one or more bus bars.
